# EUROPÄISCHE PATENTSCHRIFT

(11) **EP 0 995 782 B1**
(45) Veröffentlichungstag und Bekanntmachung des Hinweises auf die Patenterteilung: **07.09.2005**
(21) Anmeldenummer: 99119111.5
(22) Anmeldetag: 04.10.1999
(51) Int. Cl.: C09J 7/04, D04H 1/44, D04H 1/48

(54) **Verwendung eines Klebebands auf Basis eines mit Schmelzfasern thermofixierten Vlieses**
Use of an adhesive tape based on a non-woven substrate thermally fixed by melt-blown fibers
Utilisation d'un ruban adhésif à base d'un non-tissé thermofixé avec des fibres fondues-soufflées

(30) Priorität: 24.10.1998 DE 19849052; 08.05.1999 DE 19921408; 21.05.1999 DE 19923399
(43) Veröffentlichungstag der Anmeldung: 26.04.2000
(73) Patentinhaber: tesa AG, 20253 Hamburg (DE)
(72) Erfinder: Ganschow, Frank, 25368 Kiebitzreihe (DE); Külper, Klaus, Dr., 25421 Pinneberg (DE)

(56) Entgegenhaltungen:
- DE-A- 19 523 494
- US-A- 5 631 073

## Beschreibung

Die Erfindung bezieht sich auf die Verwendung eines Klebebands mit einem bandförmigen Träger aus einem mit Schmelzfasem thermofixierten Vliesmaterial, das zumindest einseitig mit einem Kleber beschichtet ist.

Klebebänder mit einem bandförmigen Träger auf Gewebe- oder Nähvliesbasis sind bekannt, wobei Gewebebänder schon seit längerer Zeit erhältlich sind und Bänder mit einem Nähvliesträger beispielsweise in der DE G 94 01 037 beschrieben werden. Als Klebebeschichtung werden bevorzugt druckempfindliche Haftklebebeschichtungen eingesetzt.

Die DE 44 42 092 beschreibt solch ein Klebeband auf Nähvliesbasis, das auf der Trägerrückseite beschichtet ist. Der DE 44 42 093 liegt auch die Verwendung eines Vlieses als Träger für ein Klebeband zugrunde, hier wird ein durch die Bildung von Maschen aus den Fasern des Vlieses verstärktes Querfaservlies beschrieben, also ein dem Fachmann unter dem Namen Malivlies bekanntes Vlies. Die DE 44 42 507 offenbart ebenfalls ein Klebeband zur Kabelbandagierung, jedoch basiert es auf sogenannten Kunitbeziehungsweise Multiknitvliesen.

Aus der DE 195 23 494 C ist die Verwendung eines Klebebandes mit einem Träger aus Vliesmaterial zum Bandagieren von Kabelbäumen bekannt, das einseitig mit einem Kleber beschichtet ist. Bei dem erfindungsgemäß zum Einsatz kommenden Vlies handelt es sich um ein Spinnvlies aus Polypropylen, das mit Hilfe eines Kalanders thermisch verfestigt und geprägt ist, wobei die Prägewalze eine Prägefläche von 10 % bis 30 %, bevorzugt 19 %, aufweist.

Mit der DE 298 04 431 wird ebenfalls die Verwendung eines Klebebandes mit einem Träger aus Vliesmaterial zum Bandagieren von Kabelbäumen offenbart, wobei das vorgeschlagene Spinnvlies aus Polyester besteht.

Aus der DE 298 19 014 U1 sind Klebebänder auf Basis eines mit Luft- und/oder Wasserstrahlen verfestigten Vlieses bekannt. Nachteil dieser Träger ist, trotz der mechanischen Verfestigung, daß durch diese Technik ein Ausziehen einzelner langer Fäden und die negative Beeinflussung der klebtechnischen Eigenschaften nicht ausgeschlossen werden kann. Bei sehr starker Verfestigung der Einzelfasem können andere vorteilhafte Trägereigenschaften speziell für die Bündelung von Kabeln in Automobilen nicht mehr erhalten werden.

Klebebänder mit einem Gewebeträger genügen hohen technischen Anforderungen, sind aber aufwendig herzustellen, teuer und neigen zum Durchschlagen der Klebmasse. Klebebänder mit Nähvliesträger haben zwar einen einfachen Aufbau, zeigen aber erhebliche Nachteile in der praktischen Anwendung, wie Probleme aufgrund des heterogenen Vliesaufbaus mit verstärkenden Parallelnähten. Des weiteren ist die Produktionsgeschwindigkeit dieser Herstelltechnologie selbst mit modernen Hochleistungsanlagen beschränkt.

Des weiteren ist bei einem einseitig klebend ausgerüsteten Klebeband mit einem herkömmlichen Malivlies als Trägermaterial, also einem nicht thermisch fixierten Malivlies, eine Behandlung der Rückseite notwendig, um ein Delaminieren des Trägers und/oder ein Herausreißen von einzelnen Fasern oder Faserbüscheln aus der Oberfläche insbesondere beim Abrollen von der Rolle zu verhindern. Alternativ kann dieses Ziel erreicht werden, indem während des Wickelvorganges der Klebebandrolle ein Trennpapier zwischen die einzelnen Klebebandlagen eingeführt wird.
Die Einzelfasem des Vlieses sind bei genähten oder anders mechanisch verfestigten Vliesen (Nadelvliese beziehungsweise luft- und/oder wasserstrahlverfestigte Vliese) zwar mechanisch verfestigt (vernäht), sind jedoch immer noch gegeneinander verschiebbar und können bei Belastungen einzeln ausgerissen werden. Dies gilt sowohl für Fasern in dem bahnförmigen Träger als auch ganz besonders für Fasern in den Oberflächen.

Verabsäumt man hier im Herstellprozeß von Träger und/oder Klebeband, zusätzliche Verbesserungen sicherzustellen, so beeinflussen die während des Abrollens der Klebebandrolle ausgerissenen Fasern die klebtechnischen Eigenschaften des Klebebandes deutlich negativ. Sie sorgen für eine schlechte Optik, wenn sie nicht sogar die gesamte Funktionsfähigkeit des Klebebandes zerstören.

Die US 5,631,073 A beschreibt ein Trägermaterial, das bevorzugt für medizinische Zwecke Verwendung finden soll. Es werden zur Herstellung des Vlieses Stapelfasern und Bindefasem eingesetzt, die in einem Folgeschritt geprägt werden. Darüber hinaus erfolgt der Einsatz von chemischen Bindemitteln. Die Verwendung von chemischen Bindemitteln ist nicht vorgesehen.
Durch das thermische Prägen von bestimmten Geometrien unter Anwendung von Druck sowie anschließendes Imprägnieren mit chemischen Bindemitteln und/oder zusätzlicher Verfestigung mittels Wasserstrahlen oder Vernadelungstechnik wird eine gute Handeinreißbarkeit in Querrichtung sowie ausreichende Trocken- und Nassfestigkeiten für medizinische Anwendungen erreicht.
Aber es werden die Hohlräume in dem Vlies aus Stapelfasem und Bindefasem durch den Prägevorgang (unter Druck und Temperatur) verdichtet und darüber hinaus zusätzlich die verbliebenen Hohlräume durch Polymerdispersionen gefüllt. Das Trägermaterial ähnelt damit einer geschlossenen Kunststofffolie, die keinerlei Dämpfungseigenschaften aufweist, da sie zu kompakt ist.

Bei dem in DE 195 23 494 A1 gezeigten Trägermaterial, das für ein Klebeband verwendet wird, handelt es sich um ein Spinnvlies, also um einen aus Endlosfilamenten hergestellten Vliesstoff. Im Vordergrund steht die Verwendung des Klebebands zum Bandagieren von Kabelbäumen.

Somit liegt der vorliegenden Erfindung die Aufgabe zugrunde, ein Klebeband so zu verbessern, daß die Nachteile des Standes der Technik nicht oder zumindest nicht in dem Umfang auftreten.

Gelöst wird diese Aufgabe durch die Verwendung eines Klebebands, wie es im Hauptanspruch niedergelegt ist. Gegenstand der Unteransprüche sind dabei vorteilhafte Weiterbildungen des Klebebands. Demgemäß betrifft die Erfindung die Verwendung eines Klebebands mit einem bandförmigen Träger aus Vliesmaterial, das zumindest einseitig mit einem Kleber beschichtet ist, wobei das Vlies ein Stapelfaservlies darstellt, das im ersten Schritt durch mechanische Bearbeitung verfestigt wird, oder aber ein Naßvlies ist, das hydrodynamisch gelegt wurde, wobei zwischen 2% und 50% der Fasern des Vlieses Schmelzfasem sind, insbesondere zwischen 5% und 40% der Fasern des Vlieses, zum Bandagieren von Kabelbäumen, wie sie insbesondere in der Automobilindustrie eingesetzt werden.

Das Vlies ist dadurch gekennzeichnet, daß die Fasern naß gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung verfestigt wird.
In einem zweiten Schritt erfolgt die Thermofixierung, wobei die Festigkeit des Vlieses durch das Auf- oder Anschmelzen der Schmelzfasem nochmals erhöht wird. Auch das besonders für die Anwendung von Klebebandrollen kritische Ausreißen von Einzelfäden aus der Oberfläche läßt sich so deutlich verbessern.

Verfestigte Vliese werden beispielsweise auf Nähwirkmaschinen des Typs "Malivlies" der Firma Malimo hergestellt und sind unter anderem bei den Firmen Naue Fasertechnik und Techtex GmbH beziehbar. Ein Malivlies ist dadurch gekennzeichnet, daß ein Querfaservlies durch die Bildung von Maschen aus Fasern des Vlieses verfestigt wird.
Als Träger kann weiterhin ein Vlies vom Typ Kunitvlies oder Multikunitvlies verwendet werden. Ein Kunitvlies ist dadurch gekennzeichnet, daß es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer, ehemals Malimo, schon seit längerer Zeit hergestellt. Ein weiteres kennzeichnendes Merkmal dieses Vlieses besteht darin, daß es als Längsfaservlies in Längsrichtung hohe Zugkräfte aufnehmen kann. Ein Multikunitvlies ist gegenüber dem Kunitvlies dadurch gekennzeichnet, daß das Vlies durch das beidseitige Durchstechen mit Nadeln sowohl auf der Ober- als auch auf der Unterseite verfestigt ist.
Schließlich sind auch Nähvliese geeignet, ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von textilen Fäden. Für diesen Typ Vlies sind Nähwirkmaschinen des Typs "Maliwatt" der Firma Karl Mayer, ehemals Malimo, bekannt.

Als Ausgangsmaterialien für den textilen Träger sind insbesondere Polyester-, Polypropylen- oder Baumwollfasern vorgesehen. Die vorliegende Erfindung ist aber nicht auf die genannten Materialien beschränkt, sondern es können eine Vielzahl weiterer Fasern zur Herstellung des Vlieses eingesetzt werden.
Bevorzugt bestehen die Grundfasem des Vlieses aus Polyester-Frisch- oder Reißfasem. Diese Fasern sollten eine Faserlänge zwischen 10 und 100 mm sowie eine Faserstärke von 1,5 bis 5 dtex aufweisen.

Genadelte, naßgelegte beziehungsweise luft- und/oder wasserstrahlverfestigte Vliese können beispielsweise bei der Firma Freudenberg bezogen werden.

Als Schmelzfasern des Vlieses kommen bevorzugt Homo- und Copolymerfasern, amorphe, unverstreckte oder Bikomponenten-Fasem zum Einsatz. Sie dienen als Bindefasem zur Verfestigung von Vliesen, indem sie durch Thermoplastifizierung und Abkühlen die Kreuzungspunkte der Trägerfasem verkleben und fixieren.
Bikomponentenfasern bestehen aus einem Faserkern, der bei höheren Temperaturen erweicht beziehungsweise schmilzt als der andere Teil der Faser, der als Mantel symmetrisch oder asymmetrisch um den härteren Kern oder auch in anderen Geometrien wie side-by-side-Konfigurationen ausgelegt sein kann. Weitere Einzelheiten sind u.a. in Fachbüchern wie "Vliesstoffe" (Georg Thieme Verlag, Stuttgart, 1982) oder "Textiltechnik" (Arbeitgeberkreis Gesamttextil, Eschborn, 1996) nachzulesen.

Derartige Fasern des Vlieses bestehen insbesondere aus Polypropylen und/oder Polyethylen sowie Mischungen oder Copolymerisaten davon. Neben Polyolefinen können auch analog bei Bedarf Schmelzfasern z.B. auf Polyester- oder Polyamidbasis eingesetzt werden.

Für eine ausreichende Thermofixierung sind im allgemeinen 10% bis 30%, insbesondere 20% der Fasern des Vlieses Schmelzfasern, insbesondere Bikomponenten-Schmelzfasem. Die Schmelzfasem sollten darüber hinaus in Titer (Feinheitsbezeichnung für Fasern und Fäden) und Faserlänge in derselben Größenordnung wie das restliche Fasermaterial liegen.

Das mechanisch vorverfestigte oder naßgelegte Vlies wird bei einer Temperatur oberhalb des Erweichungspunktes der Schmelzklebekomponente thermisch fixiert, wobei die obere Temperatur und die Verweilzeit so gewählt werden, daß das andere Polymermaterial der restlichen Fasern nicht merklich erweicht oder gar schmilzt. Es können hierzu Temperaturen von 120 °C bis 300 °C (vorzugsweise zwischen 120 °C bis 200 °C, ganz besonders vorzugsweise zwischen 130 °C bis 160 °C) gewählt werden. Durch die Erwärmung des Vlieses werden die Schmelzfasem zähfließend, so daß an den Berührungspunkten zwischen den Schmelzfasern und auch den Berührungspunkten Schmelzfaser/Faser Benetzung, Vergrößerung der Kontaktfläche bis hin zum Ineinanderfließen stattfindet, was eine starke Verbindung ergibt. Die Anzahl sowie die Stärke der Verbindungen können neben der geeigneten Auswahl des Polymeren sowie des Fasertypus während der thermischen Behandlung über die Temperatur, die Zeitdauer und gegebenenfalls durch die Aufgabe von Druck geregelt werden. Prinzipiell können auch bei geeigneter Polymerauswahl Ultraschall, Hochfrequenzstrahlung oder dergleichen die notwendige Energie zur Verfügung stellen.

Durch die thermische Behandlung werden flüchtige Komponenten wie Faserhilfstoffe beim Thermofixieren entfernt und somit entsteht ein Vlies mit günstigen Foggingwerten, so daß bei Einsatz einer foggingarmen Klebemasse ein Klebeband mit besonders günstigen Foggingwerten produziert werden kann.

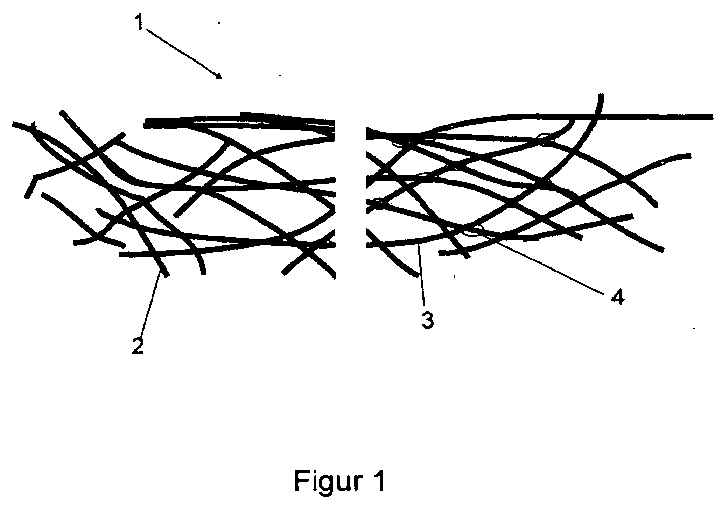

Die Figur 1 zeigt auf der linken Seite ein Vlies 1, dessen Fasern 2 (Mischung aus 80% Polyesterreißfasern und 20% Bikomponenten-Schmelzfasern) mechanisch, und zwar mittels Wasserstrahlen verfestigt worden sind. Auf der rechten Seite ist ein Vlies 1 dargestellt, das eine zusätzliche thermische Verfestigung erhalten hat. Die Schmelzfasern 3 bilden Brücken 4 untereinander und auch zu den Polyesterreißfasern aus.

Durch die Art, den Anteil sowie die Verteilung der Faserkomponenten in dem Stapelfaservlies können neben der Delaminationsfestigkeit und Einbindung der Einzelfasern in den Vliesverbund auch die Eigenschaften wie Biegesteifigkeit, Festigkeit, Dämpfungscharakter und Oberflächenstruktur, um nur einige zu nennen, beeinflußt werden, und wird der endgültige Charakter des Vlieses maßgeblich festgelegt.

Weitere Behandlungen wie Imprägnieren, Kalandrieren, Beschichten und die Herstellung von Verbundmaterialien mit anderen Trägem (Folien, Spinnvliesen, Gelegen, Geweben o.ä.) runden die Einsatzmöglichkeiten ab.
Insbesondere durch eine gezielte Kalandrierung mit geprägten Walzen kann dem Vlies eine Struktur gegeben werden, die nicht nur spezielle Oberflächenstrukturen einzustellen erlaubt, sondern auch gegebenenfalls die Handeinreißbarkeit deutlich verbessert.

In einer bevorzugten Ausführungsform weist das Vlies die folgenden Eigenschaften auf:
- ein Vliesgewicht von 60 bis 400 g/m², insbesondere 200 g/m²,
- eine Vliesdicke von 100 bis 3000 µm, insbesondere 500 bis 1000 µm,
- eine Reißkraft von 75 N/(5 cm) bis 500 N/(5 cm), insbesondere 175 N/(5 cm),
- eine Reißdehnung von 20% bis 100%, insbesondere 60% bis 70%.

Um dem erfindungsgemäßen Klebeband für den Einsatzzweck optimierte Eigenschaften zu geben, können dem Vliesträger während des Produktionsvorganges weitere Additive zugesetzt werden. Handelsübliche UV-Stabilisatoren erhöhen die Stabilität des Klebebandes gegenüber intensiver UV-Bestrahlung zum Beispiel durch die Sonne. Besonders hervorzuheben ist bei der Verwendung des Klebebandes zur Bandagierung von Kabelbäumen die Eigenschaft, daß das Klebeband durch den Zusatz von vorzugsweise Ammoniumpolyphosphat und/oder Auswahl geeigneter schwer entflammbarer Fasern flammfest ausgerüstet ist.
Durch den gezielten Einsatz farbigen Fasermaterials kann eine Vielzahl unterschiedlich farbiger Vliese gefertigt werden.

Weiter vorzugsweise ist der Vliesträger einseitig mit einer selbstklebenden Masse beschichtet, die insbesondere aus einer handelsüblichen druckempfindlichen Klebmasse auf Acrylat- oder Kautschukbasis bestehen kann.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hot-melt verarbeitbaren System.
Das Aufkonzentrieren kann in entsprechend ausgerüsteten Kesseln oder Extrudern stattfinden, insbesondere beim damit einhergehenden Entgasen ist ein Entgasungsextruder bevorzugt.
Eine derartige Klebemasse ist in der deutschen Patentanmeldung DE 43 13 008 dargelegt. Diesen auf diesem Wege hergestellten Acrylatmassen wird in einem Zwischenschritt das Lösungsmittel vollständig entzogen.
Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, daß diese einen hohen K-Wert und damit ein hohes Molekulargewicht aufweisen. Dem Fachmann ist bekannt, daß sich Systeme mit höheren Molekulargewichten effizienter vernetzen lassen. Damit sinkt entsprechend der Anteil an flüchtigen Bestandteilen.
Die Lösung der Masse kann 5 bis 80 Gew.-%, insbesondere 30 bis 70 Gew.-% Lösungsmittel enthalten.
Vorzugsweise werden handelsübliche Lösungsmittel eingesetzt, insbesondere niedrig siedende Kohlenwasserstoffe, Ketone, Alkohole und/oder Ester.
Weiter vorzugsweise werden Einschnecken-, Zweischnecken- oder Mehrschneckenextruder mit einer oder insbesondere zwei oder mehreren Entgasungseinheiten eingesetzt. In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 beschrieben. Die Klebemasse auf Acrylathotmelt-Basis kann aber auch chemisch vernetzt sein.
In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.
Der Restlösungsmittel-Gehalt sollte unter 1 Gew.-% betragen.

Die Beschichtung der Klebeseite des Trägers, insbesondere mit einer selbstklebenden Beschichtung, erfolgt in üblicher Weise. Vorteilhaft ist die herkömmliche Durchführung der Beschichtung mit Streichbalken und Lösungsmittelmassen, besser aber erfolgt diese berührungslos oder fast berührungslos mittels Siebdrucktechnik (vergleiche DE PS 33 46 100), wobei eine vollflächige oder auch segmentartige Kleberbeschichtung vorstellbar ist. Bezüglich der günstigsten Parameter wird ausdrücklich auf diese Patentschrift DE PS 33 46 100 bezug genommen, insbesondere zur Viskosität und Art des Klebers, zu den verwendeten Sieben, Bahngeschwindigkeiten und sonstigen Maßnahmen.
Aber auch die Transferbeschichtung, vorzugsweise mittels Rollstabdüsenauftragswerk, insbesondere für unterschiedlichste Hot-melt-Kleber, kann zur Anwendung kommen. Mit dieser Technologie ist die Beschichtung mit einer sehr geringen Klebmassemenge möglich. Dies kann von Vorteil sein, weil die ansonsten im Träger versinkende Klebemasse nicht nur eine Materialvergeudung darstellt, sondern sogar einen negativen Einfluß auf die Dämpfungseigenschaften des Klebebandes bei der Anwendung hat.

Wenn nur eine einseitige Beschichtung vorgesehen ist, erfolgt diese im Falle eines genähten Vlieses insbesondere auf die rauhere, faserige Seite, weil dies die Verankerung der Klebmasse auf dem Vlies fördert und gleichzeitig ein leichteres Abrollen von einer spiralförmigen Rolle erreicht wird.
Bei genadelten oder wasserstrahlverfestigten Vliesen sind nach den gängigen Herstellkonzepten beide Seiten des Vlieses zumeist gleichartig, in diesem Falle gibt es keine bevorzugte Seite.

Bei der Umwicklung von Kabelbäumen kann auf eine Beschichtung der Rückseite des Klebebandes ganz verzichtet werden.
Je nach angestrebten Verwendungen kann neben der Klebebeschichtung eine antiadhäsive Ausrüstung der Rückseite des Vliesträgers hinzukommen. Diese zusätzliche Beschichtung der zweiten Trägerseite kann mit filmbildenden Polymeren, insbesondere mit Acrylatlack erfolgen oder eine Kombination aus Schaum beziehungsweise Paste und Lack darstellen.

Die Beschichtung des Trägers kann bevorzugt nach dem im folgenden beschriebenen Verfahren erfolgen. Ist eine Beschichtung des Trägers mit Schaum und Lack vorgesehen, wird nach dem Rakelverfahren zunächst ein Acrylatdispersionsschaum auf das Trägermaterial aufgetragen. Das entstehende Zwischenprodukt wird im Anschluß kalandert, um eine Verdichtung und Vernetzung der Schaumschicht zu erzielen, bevor eine Lackschicht ebenfalls nach dem Rakelverfahren über der Schaumschicht aufgetragen wird.

Durch den erfindungsgemäßen Einsatz des Fasermixes bei der Herstellung des Vlieses kommt es zu einer deutlichen Verfestigung des Materials in "z-Richtung", ohne den Dämpfungseffekt des damit hergestellten Klebebands negativ zu beeinflussen.
Nach der thermischen Verfestigung des Vlieses sind die Berührungspunkte der Einzelfasem im Verbund fest miteinander verschmolzen, so daß beim Abrollen von der Rolle kein Spalten des Vlieses auftritt. Da auch die Einzelfasern an der Oberfläche dergestalt gebunden sind, findet ein Ausreißen dieser Fasern nicht oder zumindest nur stark eingeschränkt statt.
Das Klebeband weist eine hervorragende Dämpfungseigenschaft auf. Diese ist auf den besonderen Aufbau des Vlieses zurückzuführen: ein hoher Anteil Luft ist zwischen den einzelnen Klebebandschichten beim Verkleben eingeschlossen, der in der Lage ist, äußere Erschütterungen sehr gut abzufedern. Eine erfindungsgemäße Ummantelung aus dem Klebeband weist demnach innerhalb der einzelnen Umwicklungen eine hohe Flexibilität auf, die sich ebenfalls positiv auf die Dämpfungseigenschaften auswirkt.

Das Klebeband wird nachfolgend in seiner Herstellung in beispielhafter Ausführung beschrieben, ohne damit die Erfindung in irgendeiner Weise beschränken zu wollen.

### Beispiel 1

Auf einen thermofixierten Vliesträger mit einem Flächengewicht von 200 g / m², dessen Fasern zu 80% aus Polyesterreißfasern und zu 20% aus Bikomponenten-Schmelzfasern bestehen und der von der Firma Naue Fasertechnik GmbH bezogen werden kann, wird an einer Hänge im Rakelverfahren bei einer Bahngeschwindigkeit von 50 m / min als Klebmasse eine Naturkautschuk/Harz/Benzinklebemasse aufgetragen. Die Trocknung in der Hänge wird bei einer Temperatur von 60 °C vollzogen. Auf die andere Trägervliesseite wird zunächst in einem Spannrahmentrockner in einem Strich nach dem Rakelverfahren, wobei das Rakel eine Position von 25° zum Zenit der Streichunterwalze einnimmt, ein Acrylatdispersionsschaum (Wasseranteil: 50 Gew.-%) aufgetragen. Das vorläufige Produkt wird bei einer durchschnittlichen Temperatur von 120 °C vorgetrocknet und anschließend in-line bei einer Temperatur von 150 °C bis 180 °C und einem Druck von 10 to kalandert.

### Beispiel 2

Ein Stapelfaservlies aus 80% Polyesterfasern und 20% Copolymerschmelzfasem wird in einer produktionsüblichen Wasserstrahlverfestigungsanlage verfestigt.
Durch die gleichmäßige Verteilung der eingesetzten Fasern ist eine homogene Verteilung der Copolymerschmelzfasem in dem verfestigten Vlies gewährleistet, so daß in dem nachfolgenden Thermofixiervorgang ein gleichmäßiges Verschmelzen der Berührungspunkte von Polyesterfasern und Schmelzfasem für einen festen Halt des Flächengebildes sorgen.
Durch die so erhaltene Verfestigung des Vlieses wird die gewünschte Delaminationsfestigkeit und Einzelfaserfixierung gewährleistet sowie die Handeinreißbarkeit tendenziell verbessert. Ein wie oben beschriebenes Vlies wird an einer üblichen Beschichtungsanlage einseitig mit einer Klebemasse beschichtet.

### Beispiel 3

Ein durch Vernadelung verfestigtes Vlies von 90g/m², mit einem Anteil von 20% PP-Fasern und 80% Polyesterfasern, wird in einem Prägekalander bei 150 °C und einem Druck von 25 to kalandriert. Die so entstehende, strukturierte Oberfläche bietet für den Einsatz als Klebeband einerseits den Vorteil der thermischen Verfestigung (kein Faserausriß, Delaminationsfestigkeit sowie Handeinreißbarkeit) und andererseits eine Struktur aus Tälern und Erhebungen, die das Abwickeln von der Rolle erleichtern.

## Patentansprüche

1. Verwendung eines Klebebandes mit einem bandförmigen Träger aus Vliesmaterial, das zumindest einseitig mit einem Kleber beschichtet ist, wobei das Vlies ein Stapelfaservlies darstellt, das durch mechanische Bearbeitung verfestigt oder naßgelegt wird, wobei zwischen 2 % und 50 % der Fasern des Vlieses Schmelzfasern sind, zum Bandagieren von Kabelbäumen, wie sie insbesondere in der Automobilindustrie eingesetzt werden.

2. Verwendung nach Anspruch 1, **dadurch gekennzeichnet, daß** die Schmelzfaser des Vlieses aus Homo-, Copolymer- oder Bikomponentenfasern mit einem niedrigeren Erweichungs- oder Schmelzpunkt bestehen.

3. Verwendung nach Anspruch 1, **dadurch gekennzeichnet, daß** die Schmelzfasern des Vlieses aus Polypropylen, Polyethylen, Polyamid, Polyester oder Copolymeren bestehen.

4. Verwendung nach Anspruch 1, **dadurch gekennzeichnet, daß** 10 bis 30% der Fasern des Vlieses Schmelzfasern, insbesondere Bikomponenten-Schmelzfasern, sind.

5. Verwendung nach Anspruch 1, **dadurch gekennzeichnet, daß** das Vlies die folgenden Eigenschaften aufweist:
- ein Vliesgewicht von 60 bis 400 g/m², insbesondere 200 g/m²,
- eine Vliesdicke von 100 µm bis 3000 µm, insbesondere 500 bis 1000 µm,
- eine Reißkraft von 75 N/(5 cm) bis 500 N/(5 cm), insbesondere 175 N/(5 cm),
- eine Reißdehnung von 20 %bis 100 %, insbesondere 60 % bis 70 %.

6. Verwendung nach Anspruch 1, **dadurch gekennzeichnet, daß** das Vlies einseitig mit einer selbstklebenden Masse beschichtet ist.

7. Verwendung nach Anspruch 1, **dadurch gekennzeichnet, daß** die Klebebeschichtung aus einer handelsüblichen druckempfindlichen Klebmasse auf Acrylat- oder Kautschukbasis besteht.

8. Verwendung nach Anspruch 1, **dadurch gekennzeichnet, daß** die Rückseite des Vlieses antiadhäsiv behandelt ist.

9. Verwendung nach Anspruch 1, **dadurch gekennzeichnet, daß** dem Vlies ein oder mehrere Additive wie Pigmente oder UV-Stabilisatoren zugesetzt sind.

10. Verwendung nach Anspruch 1, **dadurch gekennzeichnet, daß** das Klebeband durch den Zusatz von vorzugsweise Ammoniumpolyphosphat flammfest ausgerüstet ist.

## Claims

1. The use of an adhesive tape having a tapelike backing of nonwoven material, which is coated on at least one side with an adhesive, the nonwoven web being a staple fibre web which is mechanically consolidated or wet-laid, between 2% and 50% of the fibres of the web being fusible fibres, for bandaging cable harnesses as are employed, in particular, in the automotive industry.

2. The use according to Claim 1, **characterized in that** the fusible fibres of the web consist of homopolymer, copolymer or bicomponent fibres having a relatively low softening or melting point.

3. The use according to Claim 1, **characterized in that** the fusible fibres of the web consist of polypropylene, polyethylene, polyamide, polyester or copolymers.

4. The use according to Claim 1, **characterized in that** from 10 to 30% of the fibres of the web are fusible fibres, especially fusible bicomponent fibres.

5. The use according to Claim 1, **characterized in that** the web has the following properties:
- a web weight of from 60 to 400 g/m², in particular 200 g/m²,
- a web thickness of from 100 µm to 3000 µm, in particular from 500 to 1000 µm,
- a breaking strength of 75 N/(5 cm) to 500 N/(5 cm), in particular 175 N/(5 cm),
- a breaking extension of from 20% to 100%, in particular from 60% to 70%.

6. The use according to Claim 1, **characterized in that** the web is coated on one side with a self-adhesive composition.

7. The use according to Claim 1, **characterized in that** the adhesive coating consists of a commercially customary pressure-sensitive adhesive composition based on acrylate or rubber.

8. The use according to Claim 1, **characterized in that** the reverse of the web has been antiadhesively treated.

9. The use according to Claim 1, **characterized in that** one or more additives such as pigments or UV stabilizers have been added to the web.

10. The use according to Claim 1, **characterized in that** the adhesive tape has been flameproofed by the addition of, preferably, ammonium polyphosphate.

## Revendications

1. Utilisation d'un ruban adhésif comportant un support en forme de ruban constitué d'un non-tissé, qui est revêtu d'un adhésif sur au moins une face, le non-tissé étant un non-tissé de fibres discontinues, consolidé par traitement mécanique ou déposé par voie humide, où de 2% à 50% des fibres du non-tissé sont des fibres soufflées à l'état fondu, pour l'enveloppement de faisceaux de câbles, comme ceux mis en oeuvre en particulier dans l'industrie automobile.

2. Utilisation selon la revendication 1, **caractérisée en ce que** les fibres soufflées à l'état fondu du non-tissé consistent en fibres d'homopolymère, de copolymère ou en fibres bicomposants à bas point de ramollissement ou de fusion.

3. Utilisation selon la revendication 1, **caractérisée en ce que** les fibres soufflées à l'état fondu du non-tissé consistent en fibres de polypropylène, de polyéthylène, de polyamide, de polyester ou de copolymères.

4. Utilisation selon la revendication 1, **caractérisée en ce que** de 10 à 30% des fibres du non-tissé sont des fibres soufflées à l'état fondu, en particulier des fibres bicomposants soufflées à l'état fondu.

5. Utilisation selon la revendication 1, **caractérisée en ce que** le non-tissé présente les propriétés suivantes :
- un poids de non-tissé de 60 à 400 g/m², en particulier de 200 g/m²,
- une épaisseur de non-tissé de 100 µm à 3000 µm, en particulier de 500 à 1000 µm,
- une force de rupture de 75 N/(5cm) à 500 N/(5cm), en particulier de 175 N/(5cm),
- un allongement à la rupture de 20% à 100%, en particulier de 60% à 70%.

6. Utilisation selon la revendication 1, **caractérisée en ce que** le non-tissé est revêtu sur une face d'une masse autoadhésive.

7. Utilisation selon la revendication 1, **caractérisée en ce que** le revêtement d'adhésif consiste en une masse adhésive du commerce sensible à la pression, à base d'acrylate ou de caoutchouc.

8. Utilisation selon la revendication 1, **caractérisée en ce que** le revers du non-tissé subit un traitement antiadhésif.

9. Utilisation selon la revendication 1, **caractérisée en ce que** l'on ajoute au non-tissé un ou plusieurs additifs tels que des pigments ou des stabilisants aux UV.

10. Utilisation selon la revendication 1, **caractérisée en ce que** le ruban adhésif est rendu ininflammable par l'addition, de préférence, de polyphosphate d'ammonium.
